# EUROPÄISCHE PATENTANMELDUNG

(11) **EP 2 314 987 A1**
(43) Veröffentlichungstag der Anmeldung: **27.04.2011**
(21) Anmeldenummer: 09013245.7
(22) Anmeldetag: 20.10.2009
(51) Int. Cl.: G01B 11/24, F01D 5/00, G01N 21/88

(54) **Oberflächenanalyse zur Detektierung verschlossener Löcher und Vorrichtung**

(71) Anmelder: SIEMENS AKTIENGESELLSCHAFT, 80333 München (DE)
(72) Erfinder: Bostanjoglo, Georg, Dr., 12161 Berlin (DE); Melzer-Jokisch, Torsten, 15366 Neuenhagen bei Berlin (DE); Oppert, Andreas, Dr., 14612 Falkensee (DE); Thomaidis, Dimitrios, 10367 Berlin (DE)

(57) **Zusammenfassung**

Durch Lasertriangulation Messungen von einem unbeschichteten und beschichteten Bauteil mit Löchern kann nach der Beschichtung die genaue Position der Löcher zum Wiederöffnen detektiert werden.

## Beschreibung

Die Erfindung betrifft ein Verfahren zur Oberflächenanalyse zur Detektierung von verschlossenen Löchern.

Bei der Reparatur von Turbinenschaufeln muss die verbrauchte Keramikschutzschicht entfernt und nach der Instandsetzung wieder aufgebracht werden. Dabei werden während des Beschichtungsverfahrens die vorhandenen Kühlluftlöcher teilweise oder komplett verschlossen. Die Position und Orientierung der Bohrlochachsen der Kühlluftlöcher sind nicht oder nur teilweise ermittelbar. Bisher wurden teilweise die Löcher durch Finden von leichten Vertiefungen der Keramikschicht und/oder kleineren Öffnungen identifiziert und mit Hilfe eines Handprozesses geöffnet. Ein sicheres, regelbares System ist nicht vorhanden.

Es ist daher Aufgabe der Erfindung oben genanntes Problem zu lösen.

Die Aufgabe wird gelöst durch ein Verfahren gemäß Anspruch 1, 6 und Vorrichtung gemäß Anspruch 7.

In den Unteransprüchen sind weitere vorteilhafte Maßnahmen aufgelistet, die beliebig miteinander kombiniert werden können, um weitere Vorteile zu erzielen.

Es zeigen:
- Figur 1, 2, 3: schematisch den Ablauf des Verfahrens,
- Figur 4: eine Gasturbine,
- Figur 5: eine Turbinenschaufel,
- Figur 6: eine Brennkammer,

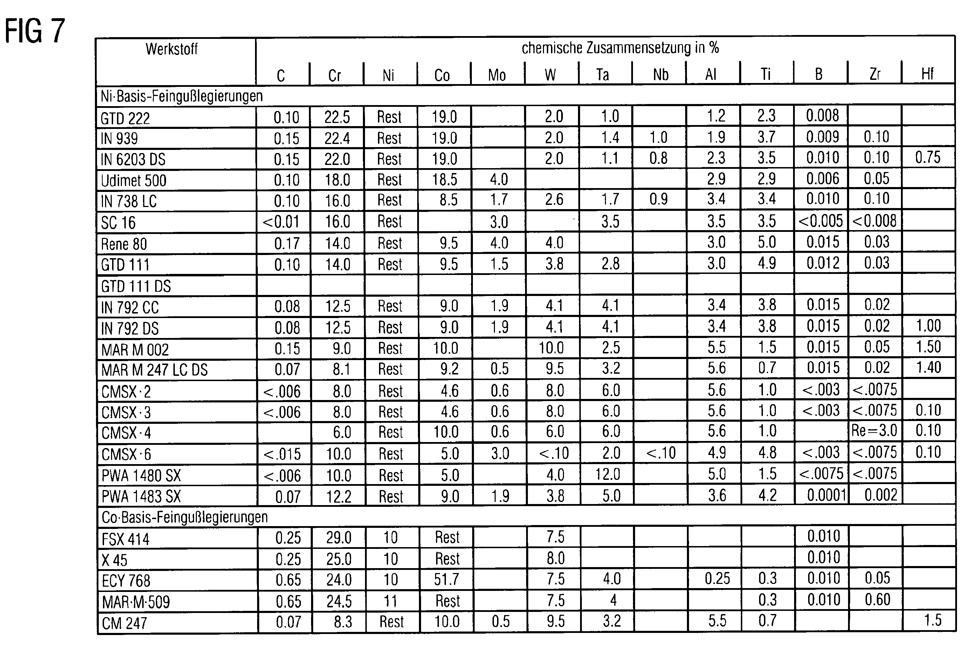

- Figur 7: eine Liste von Superlegierungen.

Die Beschreibung und die Figuren stellen nur Ausführungsbeispiele der Erfindung dar.

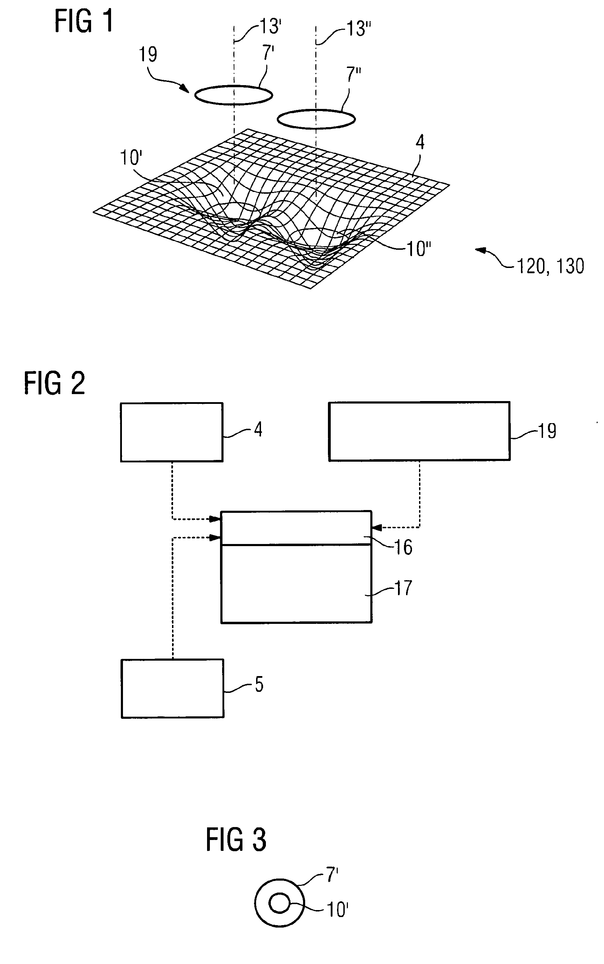

In Figur 1 ist ein Beschichtungsmodell 4 von ermittelten Geometriedaten von zwei Löchern mit Beschichtung (nicht dargestellt) dargestellt.

Ebenso dargestellt ist ein Maskenmodell 19 mit theoretischen Annahmen bezüglich der Position 7', 7" zumindest eines Lochs und der Ausrichtung 13', 13" des Lochs.

Das Maskenmodell 19 kann auch durch Vermessung des unbeschichteten Bauteils 120, 130 ermittelt werden.

Vorzugsweise mittels Triangulations-Messverfahren kann die Oberfläche von gekrümmten Flächen in akzeptabler Auflösung und in sehr kurzer Zeit in mehreren Dimensionen ermittelt werden.

Die Schaufel 120, 130, hier als beispielhaftes Bauteil, wird im unbeschichteten Zustand an den relevanten Stellen eingescannt, um die Position der Löcher und/oder um die Lage der Achsen der Löcher zu definieren. Diese Daten werden später in der Recheneinheit 16 als Maskenmodell 19 (Fig. 1, 2) verwendet.

Ebenso können bekannte Geometriedaten des Bauteils 120, 130 als Maskenmodell 19 verwendet werden, die vorab z.B. aus der Fertigung bekannt sind.

Jedenfalls müssen Lochachse, Lochwinkel (Position des Lochs) in einem Datensatz vorhanden sein (19 in Fig. 2).

Figur 2 zeigt, dass die Recheneinheit 16 Daten eines Maskenmodells 19 oder bekannte Geometriedaten 5 erhält, die gemessen werden.

Danach findet eine Beschichtung des Bauteils 120, 130 statt. Dann wird das beschichtete Bauteil 120, 130 wieder vermessen, insbesondere mittels Lasertriangulation, wodurch sich ein Beschichtungsmodell 4 ergibt.

In Kombination mit einer zuvor ermittelten Ausrichtung 7', 7" des Lochs oder der Löcher ist eine exakte Positions- und Richtungsangabe von Kühlluftlöchern im beschichteten/verschlossenen Zustand möglich.

Hier erfolgt ein iterativer Vergleich 17 der beiden Modelle 4, 19 bis die Position oder Lochmitte und Bohrachse ermittelt ist.

Dabei wird die Lage der Vertiefung einer Mulde 10', 10" eines vollkommen verschlossenen Lochs oder die Lage 10', 10" der Öffnung eines teilweise verschlossenen Lochs herangezogen, um die Lochmitte und Achsenlage des unverschlossenen Lochs zu ermitteln.

Ebenso kann die Umrandung der Mulde 10', 10" mit der Umrandung des Lochs verglichen werden (Fig. 3), um die Lage des Lochs zu ermitteln. Dabei muss die Umrandung der Mulde 10', ob klein oder groß, je nach Beschichtung eine bestimmte Ausrichtung in der Umrandung 7' aufweisen, hier beispielsweise konzentrisch (Fig. 3). Bei mehreren Löchern wird iterativ über alle Löcher der beste Fit ermittelt. Nur so kann das Wiederöffnen durchgeführt werden.

Rechnergestützt kann nun der Mittelpunkt eines Lochs kalkuliert werden (17 in Fig. 2) und ein Bearbeitungsprogramm zum Wiederöffnen generiert werden, das die Entfernung des "Coat down" aus dem Loch ermöglicht.

Neben der rechnergestützten Ermittlung von Positions- und Winkeldaten für Kühlluftlöcher unterhalb einer Beschichtung ist hier vor allem die exakte Position der Kühlluftbohrung für jede einzelne Schaufel und in jedem Fertigungszustand der maßgebliche Vorteil. Der Verzug einer Schaufel 120, 130 während der Beschichtung ist derzeit nur mit empirisch ermittelten Vorgehensweisen vorauszusagen. Die hier verwendete Methodik kann diese Vorhersage prüfen und eine exakte Position ermitteln (Schritt 17 in Fig. 2).

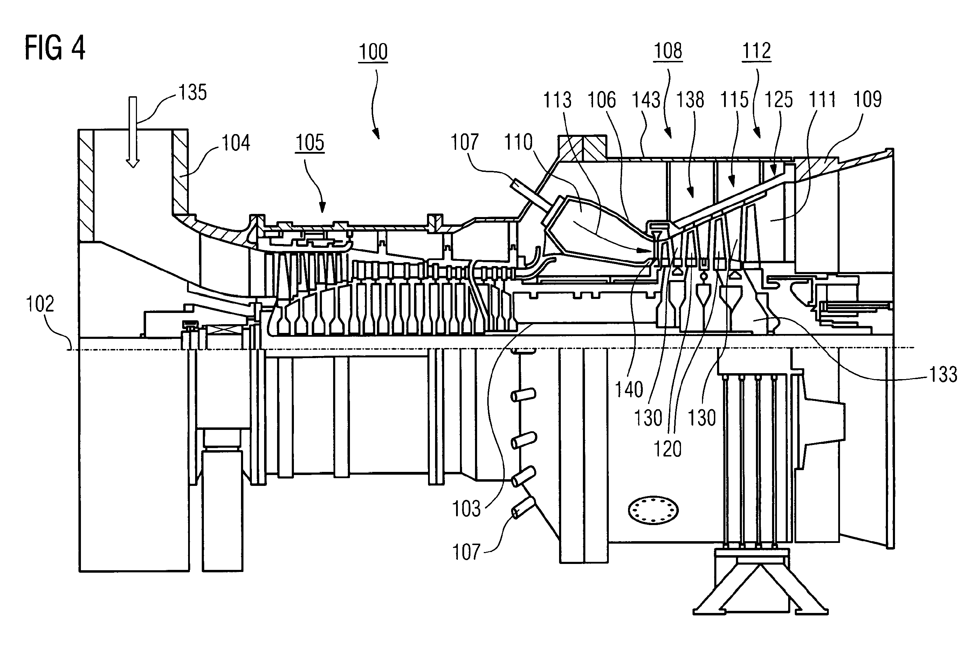

Die Figur 4 zeigt beispielhaft eine Gasturbine 100 in einem Längsteilschnitt.

Die Gasturbine 100 weist im Inneren einen um eine Rotationsachse 102 drehgelagerten Rotor 103 mit einer Welle auf, der auch als Turbinenläufer bezeichnet wird.

Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.

Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.

Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.

An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.

Um den dort herrschenden Temperaturen standzuhalten, können diese mittels eines Kühlmittels gekühlt werden.

Ebenso können Substrate der Bauteile eine gerichtete Struktur aufweisen, d.h. sie sind einkristallin (SX-Struktur) oder weisen nur längsgerichtete Körner auf (DS-Struktur).

Als Material für die Bauteile, insbesondere für die Turbinenschaufel 120, 130 und Bauteile der Brennkammer 110 werden beispielsweise eisen-, nickel- oder kobaltbasierte Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

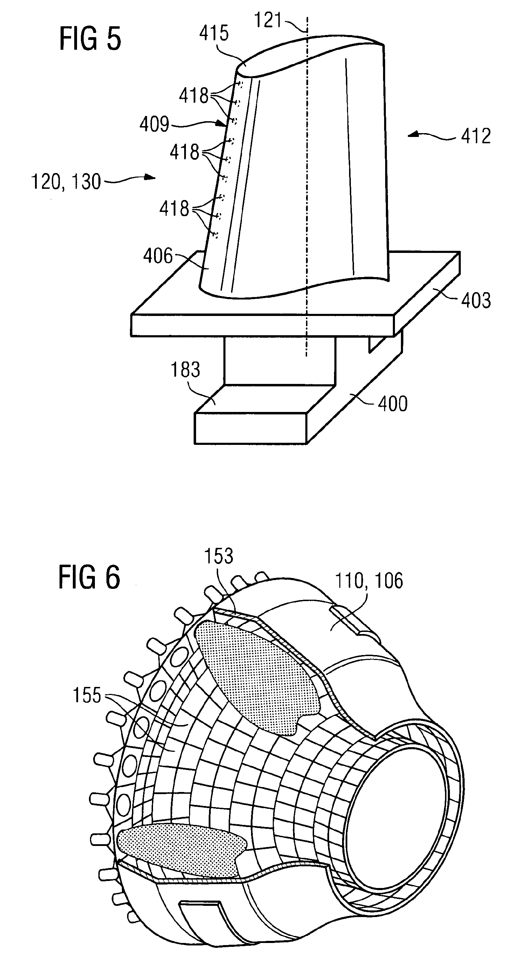

Die Figur 5 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.

Als Leitschaufel 130 kann die Schaufel 130 an ihrer Schaufelspitze 415 eine weitere Plattform aufweisen (nicht dargestellt) .

Im Befestigungsbereich 400 ist ein Schaufelfuß 183 gebildet, der zur Befestigung der Laufschaufeln 120, 130 an einer Welle oder einer Scheibe dient (nicht dargestellt).

Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.

Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.

Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures). Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.

Die Dichte liegt vorzugsweise bei 95% der theoretischen Dichte.

Auf der MCrAIX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0, 6Y-0, 7Si oder Co-28Ni-24Cr-10A1-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11A1-0,4Y-2Re oder Ni-25Co-17Cr-10Al-0, 4Y-1, 5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

Die Figur 6 zeigt eine Brennkammer 110 der Gasturbine 100. Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.

Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1.

Auf der MCrAlX kann noch eine beispielsweise keramische Wärmedämmschicht vorhanden sein und besteht beispielsweise aus ZrO₂ Y₂O₃-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Turbinenschaufeln 120, 130, Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in der Turbinenschaufel 120, 130 oder dem Hitzeschildelement 155 repariert. Danach erfolgt eine Wiederbeschichtung der Turbinenschaufeln 120, 130, Hitzeschildelemente 155 und ein erneuter Einsatz der Turbinenschaufeln 120, 130 oder der Hitzeschildelemente 155.

## Patentansprüche

1. Verfahren zur Oberflächenanalyse von zu öffnenden, zumindest teilweise verschlossenen Löchern eines Bauteils (120, 130) nach einer Beschichtung,
bei dem ein Bauteil (120, 130) mit den nicht verschlossenen Löchern im unbeschichteten Zustand vermessen wird und ein Maskenmodell (19) generiert wird,
insbesondere mittels Messung durch Lasertriangulation, das (19) zumindest die Position der Löcher als auch die Orientierung ihrer Längsachsen beinhaltet,
oder dass das Maskenmodell (19) aus einem Datensatz vorab bekannt ist,
und dass eine Messung,
insbesondere mittels Lasertriangulation,
mit dem beschichteten Bauteil (120, 130) und den **dadurch** zumindest teilweise verschlossenen Löchern durchgeführt wird,
wobei der so generierte Datensatz das Beschichtungsmodell (4) darstellt und
dass das Maskenmodell (19) mit dem Beschichtungsmodell (4) verglichen wird,
um die Detektierung der verschlossenen Löcher zu ermöglichen.

2. Verfahren nach Anspruch 1,
bei dem das Maskenmodell (19) aus dem Design des Bauteils (120, 130) vorab bekannt ist.

3. Verfahren nach Anspruch 1 oder 2,
bei dem durch Iteration die bestmögliche Übereinstimmung von Maskenmodell (19) und Beschichtungsmodell (4) ermittelt wird.

4. Verfahren nach Anspruch 1, 2 oder 3,
bei dem vollkommen verschlossene Löcher detektiert werden, insbesondere nur Verschlossene Löcher detektiert werden.

5. Verfahren nach Anspruch 1, 2, 3 oder 4,
bei dem nur teilweise verschlossene Löcher detektiert werden,
insbesondere nur teilweise verschlossene Löcher detektiert werden.

6. Verfahren zum Wiederöffnen von beschichteten Löchern eines Bauteils (120, 130),
bei dem die Position und Orientierung der Löcher durch ein Verfahren gemäß Anspruch 1, 2, 3, 4 oder 5 detektiert wird, und Wiederöffnen der Löcher mit einem Bearbeitungsprogramm, das durch den Vergleich von Maskenmodell (19) und Beschichtungsmodell (4) generiert wurde.

7. Vorrichtung,
insbesondere zur Durchführung des Verfahrens nach Anspruch 1, 2, 3, 4 oder 5,
die aufweist:
eine Halterung für das Bauteil (120, 130) das Bauteil (120, 130)
ein Messsensor,
insbesondere ein Sensor zur Lasertriangulation,
eine Recheneinheit mit Speichereinheit für Maskenmodelle (19) und Beschichtungsmodelle (4) und
zur iterativen Ermittlung der Position und Orientierung der Löcher,
und insbesondere zur Generierung eines
Bearbeitungsprogramm.
